# EUROPÄISCHE PATENTSCHRIFT

(11) **EP 3 549 825 B1**
(45) Veröffentlichungstag und Bekanntmachung des Hinweises auf die Patenterteilung: **02.06.2021**
(21) Anmeldenummer: 19167333.4
(22) Anmeldetag: 04.04.2019
(51) Int. Cl.: B60R 3/02, B60P 3/36

(54) **TRITTSTUFENSYSTEM FÜR EIN FAHRZEUG**
FOOT STEP SYSTEM FOR A VEHICLE
SYSTÈME DE MARCHEPIED POUR UN VÉHICULE.

(30) Priorität: 05.04.2018 DE 102018108108; 19.04.2018 DE 102018109431
(43) Veröffentlichungstag der Anmeldung: 09.10.2019
(73) Patentinhaber: Hymer GmbH & Co. KG, 88339 Bad Waldsee (DE)
(72) Erfinder: Sawetzki, Bernhard, 88364 Wolfegg (DE)
(74) Vertreter: Waller, Stefan

(56) Entgegenhaltungen:
- DE-A1-102009 032 515
- US-A- 3 743 320
- US-A- 5 228 707
- US-A1- 2014 239 609
- US-B1- 6 209 682

## Beschreibung

Die Erfindung betrifft ein Trittstufensystem für ein Fahrzeug nach dem Oberbegriff des Anspruchs 1 sowie ein Fahrzeug nach Anspruch 7.

Aus der DE 10 2009 032 515 A1 kennt man bereits ein Trittstufensystem für ein Fahrzeug. Das bekannte Trittstufensystem umfasst eine Treppe mit wenigstens einer Treppenstufe sowie eine Leiter mit einer Trittfläche und wenigstens einer Sprosse, wobei die wenigstens eine Treppenstufe eine Trittfläche umfasst und wobei die wenigstens eine Treppenstufe ein Stauraumvolumen bildet. Nachteilig am bekannten Trittstufensystem ist insbesondere dessen hoher Platzbedarf, der insbesondere auf die außerhalb des Trittstufensystems angeordnete Leiter zurückzuführen ist Aus der US 5 228 707 A1 ist eine Fahrzeugtreppe für ein Wohnmobil bekannt.

Aufgabe der Erfindung ist es, ein besonders platzsparendes und vielseitig verwendbares Trittstufensystem für ein Fahrzeug bereitzustellen.

Ausgehend von einem Trittstufensystem für ein Fahrzeug der eingangs genannten Art wird die Aufgabe durch ein Trittstufensystem nach Anspruch 1 gelöst.

Auf diese Weise wird ein besonders platzsparendes Trittstufensystem bereitgestellt und es wird ermöglicht, dass die Leiter auch nur bei tatsächlichem Bedarf verwendbar ist, wodurch auch ein besonders vielseitig einsetzbares Trittstufensystem bereitgestellt wird.

In einer besonders vorteilhaften Ausgestaltung kann die Erfindung vorsehen, dass die Leiter in der Ruhestellung in einer in der Treppenstufe ausgebildeten Kulissenführung angeordnet ist.

Dadurch wird ein besonders einfaches Entnehmen der Leiter aus dem Stauraum im Falle einer Verwendung und überdies auch ein besonders einfaches Rückführen der Leiter in den Stauraum nach Verwendung ermöglicht. Beschädigungen der Leiter können dadurch auch vermieden werden.

In einer weiteren vorteilhaften Ausgestaltung der Erfindung kann vorgesehen sein, dass die Trittfläche der Leiter in einer Gebrauchsstellung an der Treppenstufe angeordnet ist.

Dadurch kann eine besonders einfache Leiterkonstruktion verwendet werden, bei der die Treppenstufe als Bestandteil der Leiter ausgebildet ist. Zudem wird eine stabile Befestigungsmöglichkeit der Leiter an der Treppenstufe ermöglicht.

In einer Weiterbildung der Erfindung kann vorgesehen sein, dass die Trittfläche der Leiter und die Trittfläche der Treppenstufe, in dessen Stauraumvolumen die Leiter in der Ruhestellung angeordnet ist, in Gebrauchsstellung eine im Wesentlichen ebene gemeinsame Trittfläche bilden.

Dies kann insofern vorteilhaft sein, dass aus einer vergrößerten Trittfläche eine verminderte Unfallgefahr für einen Benutzer resultieren kann. Vorteilhaft ist weiterhin, dass eine hinreichend große gesamte bzw. gemeinsame Trittfläche bereitgestellt werden kann, selbst wenn die Trittfläche der Treppenstufe ganz oder teilweise unzugänglich ist, beispielsweise wenn dort ein Gegenstand angeordnet ist.

Um ein besonders einfaches Zugänglichmachen des Stauraums zu ermöglichen, kann im Rahmen der Erfindung auch vorgesehen sein, dass die wenigstens eine Treppenstufe, welche das Stauraumvolumen bildet, eine Trittfläche aufweist, die schwenkbar und/oder abnehmbar ausgebildet ist.

Erfindungsgemäss ist vorgesehen, dass die Leiter, insbesondere die Trittfläche der Leiter, in einer Gebrauchsstellung eine Treppenstufe, insbesondere deren Trittfläche überragt, welche Treppenstufe in einer Aufstiegsrichtung vor der Treppenstufe, die das Stauraumvolumen bildet, welches die Leiter in der Ruhestellung umfasst, angeordnet ist.

Hierdurch kann ein besonders vielseitig einsetzbares Trittstufensystem bereitgestellt werden, welches zum Beispiel auch dann verwendbar ist, wenn eine oder mehrere Treppenstufe(n) nicht zugänglich ist bzw. sind.

Die Erfindung kann ganz bevorzugt vorsehen, gekennzeichnet, dass die als Klappleiter ausgebildete Leiter zum Auf- und Zuklappen zumindest eine Gelenkanordnung umfasst. Auf diese Weise lässt sich die Klappleiter ganz besonders einfachen klappen.

Besonders vorteilhaft kann dabei vorgesehen sein, dass die als Klappleiter ausgebildete Leiter Holme umfasst, die über wenigstens eine Gelenkanordnung mit der Trittfläche oder einem Rahmenelement der Klappleiter verbunden sind.

Auf diese Weise können Holme der Leiter, an denen optional zumindest eine Sprosse vorgesehen sein kann, einfach klappbar zum Rahmenelement der Leiter sein.

Vorgesehen sein kann überdies, dass in Gebrauchsstellung Holme der Leiter relativ zu einer Unterseite der Trittfläche der Leiter klappbar ausgebildet sind.

Eine derartig ausgebildete Klappleiter kann auf einfache Weise von einer Gebrauchsstellung in eine Zwischenstellung überführbar sein. Beispielsweise kann es sodann möglich sein, die Leiter von der Zwischenstellung über Schiebebewegungen, insbesondere via Kulissenführungen, in eine Ruhestellung zu überführen.

Vorteilhaft kann im Rahmen der Erfindung auch möglich sein, dass die als Klappleiter ausgebildete Leiter in einer Gebrauchsstellung zumindest eine Treppenstufe überbrückend angeordnet ist. Eine derartige Trittflächenverlängerung kann die Bedienerfreundlichkeit des Treppensystems signifikant erhöhen.

Möglich kann weiterhin sein, dass eine Trittfläche der Klappleiter in einer Gebrauchsstellung an der die das Stauraumvolumen bildende Treppenstufe befestigt, insbesondere angelenkt befestigt ist. Hierdurch kann eine ausreichende Stabilisierung des Trittstufensystems gewährleistet werden und eine einfache Montage bzw. Demontage der Leiter ermöglicht werden.

Die Erfindung betrifft weiterhin ein Fahrzeug, insbesondere ein Camping- oder Freizeitfahrzeug, wobei das Fahrzeug ein erfindungsgemäßes Trittstufensystem umfasst, welches vorzugsweise in einem Innenraumbereich des Fahrzeugs angeordnet ist.

Ein derartiges Fahrzeug zeichnet sich gemäß vorstehenden Ausführungen hinsichtlich seiner vielfältigen Einsatzmöglichkeiten besonders aus.

Nachstehend wir die Erfindung anhand von Zeichnungen näher erläutert. Hierbei zeigt:
Fig. 1: eine schematische Darstellung des erfindungsgemäßen Trittstufensystems in einer Ruhestellung,
Fig. 2: das Trittstufensystem gemäß Fig. 1 in einer Gebrauchsstellung.

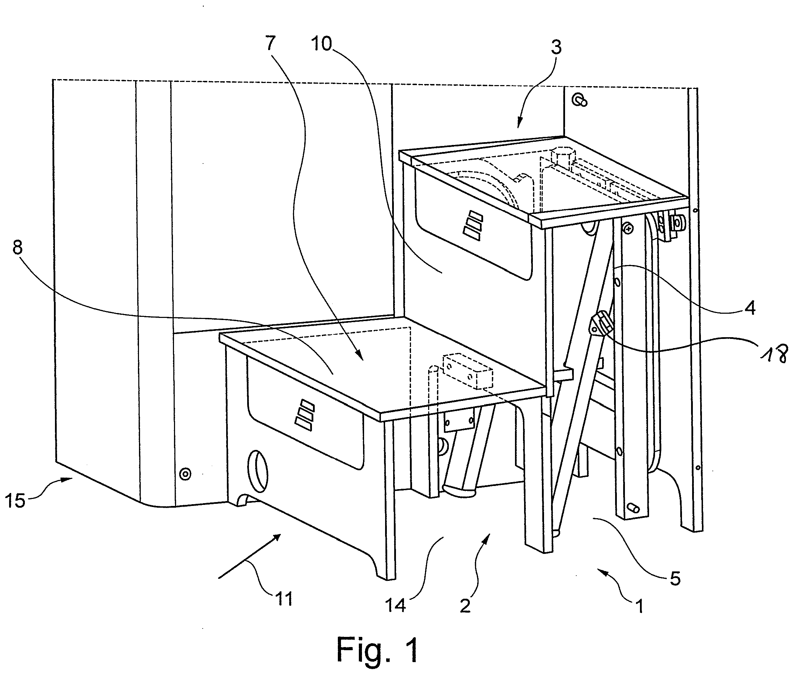

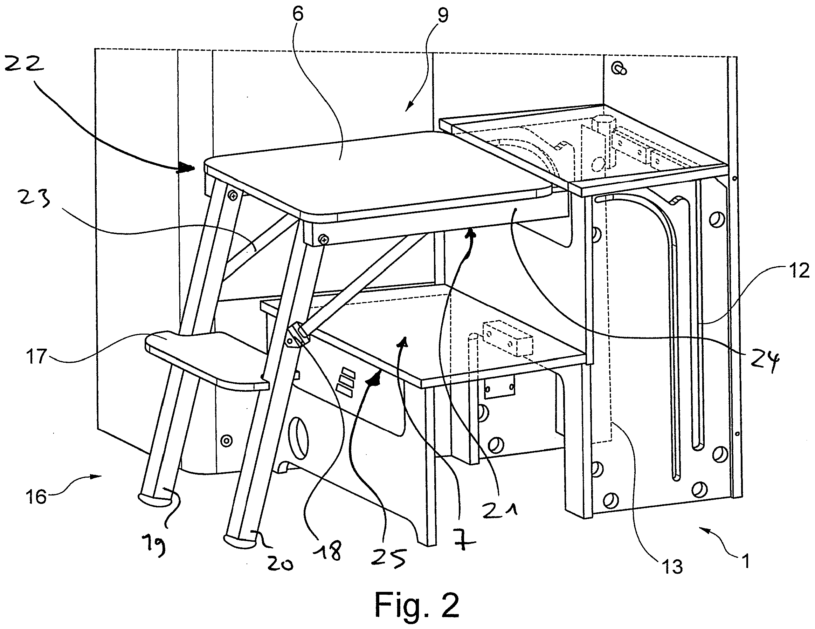

In der Fig. 1 ist in schematischer Darstellung ein Trittstufensystem 1 für ein nicht näher dargestelltes Fahrzeug in einer Ruhestellung 15 gezeigt. Das Trittstufensystem 1 umfasst eine Treppe 2 mit Treppenstufen 3, 7 sowie eine Leiter 4 mit einer Trittfläche 6 (siehe Fig. 2). Die Treppenstufen 3, 7 umfassen je eine Trittfläche. Aufgrund vereinfachter Darstellung ist lediglich eine Trittfläche 8 der Treppenstufe 7 dargestellt. In gleicher Weise, jedoch nicht dargestellt, umfasst auch die Treppenstufe 3 eine Trittfläche. Diese nicht dargestellte Trittfläche kann als abnehmbare Trittfläche ausgebildet sein. Weiterhin bilden die Treppenstufen 3, 7 jeweils ein Stauraumvolumen 5, 14 aus.

Um ein möglichst platzsparend und vielseitig einsetzbares Trittstufensystem 1 bereitstellen zu können, ist die Leiter 4 in der Ruhestellung 15 in dem Stauraumvolumen 5 der Treppenstufe 3 angeordnet. Zudem ist die Leiter 4 als Klappleiter ausgebildet, damit eine platzsparende Verstauung möglich ist.

Im Ausführungsbeispiel ist die Leiter 4 in der Ruhestellung 15 in einer in der Treppenstufe 3 ausgebildeten Kulissenführung 12 (siehe Fig. 2) angeordnet. Die Kulissenführung 12 ist dabei in einer Seitenwand 13 der Treppenstufe 3 ausgebildet bzw. angeordnet. Die Leiter 4 ist als integraler Bestandteil der Treppenstufe 3 ausgebildet.

Sobald beispielsweise die Trittfläche der Treppenstufe 3 nicht oder nur noch eingeschränkt benutzbar ist, kann es erforderlich sein, eine Alternative zu der Trittfläche bereitzustellen, damit die Treppe 2 weiterhin nutzbar ist. Dies wird durch die Leiter 4, die in der Ruhestellung 15 in dem Stauraumvolumen angeordnet ist, ermöglicht.

In der Fig. 2 ist das Trittstufensystem 1 in einer Gebrauchsstellung 16, die durch Entnahme der Leiter 4 aus dem Stauraumvolumen 5 und Aufklappen erzeugbar ist, gezeigt.

Die Leiter 4 ist als Klappleiter ausgebildet. Hierzu umfasst die Leiter 4 Gelenkanordnungen 18, 23.

Die Klappleiter 4 umfasst ferner eine Trittfläche 6 und Holme 19 20. Die Holme 19, 20 sind über Gelenkanordnungen mit der Trittfläche 6 bzw. einem Rahmenelement 24 klappbar verbunden.

Trittfläche 6 und Rahmenelement 24 können auch als einstückige Baugruppe aufgefasst werden, so dass die exakte Lokalisierung der Anbindung der Gelenkanordnungen von untergeordneter Bedeutung ist.

Es ist im Ausführungsbeispiel ein Rahmenelement 24 vorgesehen, auf dem Trittfläche 6 angeordnet ist. Weiterhin ist im Ausführungsbeispiel eine Sprosse 17 vorgesehen, die zwischen Holmen 19, 20 angeordnet ist. Rahmenelement 24 sowie Sprosse 17 können jedoch weggelassen werden. Rahmenelement 24 und Trittfläche 6 können einstückig ausgebildet sein.

Zur stabilen Befestigung der Leiter 4 und damit zur sicheren Benutzung, ist die Trittfläche 6 der Leiter 4 an der Treppenstufe 3, insbesondere an einer Frontseite 10 der Treppenstufe 3 angeordnet. Eine Entnahme der Leiter 4 ist dadurch vereinfacht ermöglicht, dass die Treppenstufe 3, welche das Stauraumvolumen 5 bildet, eine schwenkbar bzw. abnehmbar ausgebildete Trittfläche 8 aufweist.

Es ist in der Fig. 2 weiterhin dargestellt, dass die Trittfläche 6 der Leiter 4 und die Trittfläche 8 der Treppenstufe 3, in dessen Stauraumvolumen 5 die Leiter 4 in der Ruhestellung 15 angeordnet ist, in Gebrauchsstellung 16 eine im Wesentlichen ebene gemeinsame Trittfläche 9 bilden.

Dargestellt ist zudem, dass die Leiter 4, insbesondere die Trittfläche 6 der Leiter 4, in der Gebrauchsstellung 16 die Treppenstufe 7 bzw. deren Trittfläche 8 überragt, welche Treppenstufe 7 in einer Aufstiegsrichtung 11 vor der Treppenstufe 3, die das Stauraumvolumen 5 bildet, angeordnet ist.

Die Trittfläche 6 der Leiter 4 ist dabei im Wesentlichen parallel zu der Trittfläche 8 der Treppenstufe 7 angeordnet. Die Leiter 4 umfasst ferner eine Sprosse 17, die nun als alternative Trittfläche zur Trittfläche 8 der Treppenstufe 7 ausgebildet ist, da diese nun aufgrund der Anordnung der Trittfläche 6 der Leiter 4 über der Trittfläche 8 nicht mehr zugänglich ist.

Im gezeigten Ausführungsbeispiel nach Fig. 2 ist die Trittfläche 6 die Treppenstufe 7 überbrückend angeordnet.

Zudem ist in Fig. 2 erkennbar, dass die überbrückende Anordnung dergestalt ist, dass ein vorderes Ende 22 der Trittfläche 6 der Leiter 4 ein vorderes Ende 25 der Trittfläche 7 überragt.

Somit hat die Treppenstufe eine geringere Länge als die Trittfläche 6 der Leiter 4.

Im Ausführungsbeispiel ist ferner gezeigt, dass in Gebrauchsstellung (Fig. 2) Holme 18, 19 der Leiter 4 zu einer Unterseite 21 der Trittfläche 6 der Leiter 4 klappbar ausgebildet sind.

Die Holme 6, 7 sind relativ zur Trittfläche 6 schwenkbar ausgebildet.

Hierfür sind insbesondere Gelenkanordnungen vorgesehen, wobei die Gelenkanordnungen bevorzugt unterhalb der Trittfläche 6 angeordnet bzw. befestigt sind.

Da gemäß vorstehenden Ausführungen Trittfläche 6 und Rahmenelement 24 auch einstückig ausgebildet sein können, kann dies auch derart aufgefasst werden, dass Holme der Leiter zu einer Unterseite des Rahmenelements klappbar ausgebildet sind.

### Bezugszeichenliste:

1 Trittstufensystem
2 Treppe
3 Treppenstufe
4 Leiter
5 Stauraumvolumen
6 Trittfläche
7 Treppenstufe
8 Trittfläche
9 Trittfläche
10 Frontseite
11 Aufstiegsrichtung
12 Kulissenführung
13 Seitenwand
14 Stauraumvolumen
15 Ruhestellung
16 Gebrauchsstellung
17 Sprosse
18 Gelenkanordnung
19 Holm
20 Holm
21 Unterseite
22 vorderes Ende
23 Gelenkanordnung
24 Rahmenelement
25 vorderes Ende

## Patentansprüche

1. Trittstufensystem für ein Fahrzeug, insbesondere für ein Camping- oder Freizeitfahrzeug, wobei das Trittstufensystem (1) eine Treppe (2) mit wenigstens einer Treppenstufe (3, 7) sowie eine Leiter (4) mit einer Trittfläche (6) und wenigstens einer Sprosse (17) umfasst, wobei die wenigstens eine Treppenstufe (3, 7) eine Trittfläche (8) umfasst und wobei die wenigstens eine Treppenstufe (3, 7) ein Stauraumvolumen (5, 14) bildet, wobei die Leiter (4) als Klappleiter ausgebildet ist und in einer Ruhestellung (15) in dem Stauraumvolumen (5, 14) der Treppenstufe (3, 7) angeordnet ist
**dadurch gekennzeichnet,**
**dass** die Leiter (4), insbesondere die Trittfläche (6) der Leiter (4), in einer Gebrauchsstellung (16) eine zweite Treppenstufe (7), insbesondere deren Trittfläche (8) überragt, welche zweite Treppenstufe (7) in einer Aufstiegsrichtung (11) vor der Treppenstufe (3), die das Stauraumvolumen (5, 14) bildet, welches die Leiter (4) in der Ruhestellung (15) umfasst, angeordnet ist.

2. Trittstufensystem nach Anspruch 1,
**dadurch gekennzeichnet,**
**dass** die Leiter (4) in der Ruhestellung (15) in einer in der Treppenstufe (3, 7) ausgebildeten Kulissenführung (12) angeordnet ist.

3. Trittstufensystem nach einem der vorangehenden Ansprüche,
**dadurch gekennzeichnet,**
**dass** die Trittfläche (6) der Leiter (4) in einer Gebrauchsstellung (16) an der Treppenstufe (3, 7) angeordnet ist.

4. Trittstufensystem nach einem der vorangehenden Ansprüche,
**dadurch gekennzeichnet,**
**dass** die Trittfläche (6) der Leiter (4) und die Trittfläche (8) der Treppenstufe (3), in deren Stauraumvolumen (5, 14) die Leiter (4) in der Ruhestellung (15) angeordnet ist, in Gebrauchsstellung (16) eine im Wesentlichen ebene gemeinsame Trittfläche (9) bilden.

5. Trittstufensystem nach einem der vorangehenden Ansprüche,
**dadurch gekennzeichnet,**
**dass** die Trittfläche (8) der wenigstens einen Treppenstufe (3, 7), welche das Stauraumvolumen (5, 14) bildet, schwenkbar und/oder abnehmbar ausgebildet ist.

6. Trittstufensystem nach einem der vorangehenden Ansprüche,
**dadurch gekennzeichnet,**
**dass** die als Klappleiter ausgebildete Leiter (4) zum Auf- und Zuklappen zumindest eine Gelenkanordnung (18, 23) umfasst.

7. Trittstufensystem nach Anspruch 6,
**dadurch gekennzeichnet,**
**dass** die als Klappleiter ausgebildete Leiter (4) Holme (19, 20) umfasst, die über wenigstens eine Gelenkanordnung (18, 23) mit der Trittfläche (6) oder einem Rahmenelement (24) der Klappleiter (4) verbunden sind.

8. Trittstufensystem nach Anspruch 7,
**dadurch gekennzeichnet,**
**dass** in Gebrauchsstellung Holme (18, 19) der Leiter (4) relativ zu einer Unterseite (21) der Trittfläche (6) der Leiter (4) klappbar ausgebildet sind.

9. Trittstufensystem nach einem der vorangehenden Ansprüche,
**dadurch gekennzeichnet,**
**dass** die als Klappleiter ausgebildete Leiter (4) in einer Gebrauchsstellung (16) zumindest eine Treppenstufe (7) überbrückend angeordnet ist.

10. Trittstufensystem nach einem der vorangehenden Ansprüche,
**dadurch gekennzeichnet,**
**dass** eine Trittfläche (6) der Klappleiter (4) in einer Gebrauchsstellung (16) an der die das Stauraumvolumen (5) bildende Treppenstufe (7) befestigt, insbesondere angelenkt befestigt ist.

11. Fahrzeug, insbesondere Camping- oder Freizeitfahrzeug.
**dadurch gekennzeichnet,**
**dass** das Fahrzeug ein Trittstufensystem (1) nach einem der Ansprüche 1 bis 10 umfasst.

## Claims

1. Step system for a vehicle, in particular for a camping or recreational vehicle, wherein the step system (1) comprises a set of steps (2) having at least one step (3, 7) and also comprises a ladder (4) having a tread surface (6) and at least one rung (17), wherein the at least one step (3, 7) comprises a tread surface (8), and wherein the at least one step (3, 7) forms a stowage-space volume (5, 14), wherein the ladder (4) is designed in the form of a folding ladder and, in a rest position (15), is arranged in the stowage-space volume (5, 14) of the step (3, 7),
**characterized in that,**
in a use position (16), the ladder (4), in particular the tread surface (6) of the ladder (4), projects beyond a second step (7), in particular the tread surface (8) thereof, which second step (7) is arranged, as seen in a climbing direction (11), in front of the step (3) which forms the stowage-space volume (5, 14), which encloses the ladder (4) in the rest position (15).

2. Step system according to Claim 1,
**characterized in that,**
in the rest position (15), the ladder (4) is arranged in a slotted-track guide (12) formed in the step (3, 7).

3. Step system according to either of the preceding claims,
**characterized in that,**
in a use position (16), the tread surface (6) of the ladder (4) is arranged on the step (3, 7).

4. Step system according to one of the preceding claims,
**characterized in that,**
in the use position (16), the tread surface (6) of the ladder (4) and the tread surface (8) of the step (3) in the stowage-space volume (5, 14) of which the ladder (4) is arranged in the rest position (15), form a substantially planar common tread surface (9) .

5. Step system according to one of the preceding claims,
**characterized in that**
the tread surface (8) of the at least one step (3, 7) which forms the stowage-space volume (5, 14) is designed such that it can be pivoted and/or removed.

6. Step system according to one of the preceding claims,
**characterized in that**
the ladder (4), which is designed in the form of a folding ladder, comprises at least one joint arrangement (18, 23) for folding the ladder open and closed.

7. Step system according to Claim 6,
**characterized in that**
the ladder (4), which is designed in the form of a folding ladder, comprises stiles (19, 20), which are connected to the tread surface (6) or a frame element (24) of the folding ladder (4) via at least one joint arrangement (18, 23).

8. Step system according to Claim 7,
**characterized in that,**
in the use position, stiles (18, 19)of the ladder (4) are designed such that they can be folded relative to an underside (21) of the tread surface (6) of the ladder (4).

9. Step system according to one of the preceding claims,
**characterized in that,**
in a use position (16), the ladder (4), which is designed in the form of a folding ladder, is arranged such that it bridges at least one step (7).

10. Step system according to one of the preceding claims,
**characterized in that,**
in a use position (16), a tread surface (6) of the folding ladder (4) is fastened, in particular fastened in an articulated manner, on the step (7) which forms the stowage-space volume (5).

11. Vehicle, in particular camping or recreational vehicle,
**characterized in that**
the vehicle comprises a step system (1) according to one of Claims 1 to 10.

## Revendications

1. Système de marchepied pour un véhicule, en particulier pour un véhicule de camping ou de loisir, dans lequel le système de marchepied (1) comprend un escalier (2) pourvu d'au moins une marche (3, 7) ainsi qu'une échelle (4) pourvue d'une surface de marche (6) et d'au moins un barreau (17), ladite au moins une marche (3, 7) comprenant une surface de marche (8), et ladite au moins une marche (3, 7) formant un volume de rangement (5, 14), l'échelle (4) étant réalisée sous la forme d'une échelle pliante et étant disposée dans le volume de rangement (5, 14) de la marche (3, 7) dans une position de repos (15),
**caractérisé en ce que** l'échelle (4), en particulier la surface de marche (6) de l'échelle (4), dans une position d'utilisation (16), dépasse une deuxième marche (7), en particulier la surface de marche (8) de celle-ci, laquelle deuxième marche (7) est disposée dans une direction de montée (11) devant la marche (3) qui forme le volume de rangement (5, 14) qui comprend l'échelle (4) dans la position de repos (15) .

2. Système de marchepied selon la revendication 1, **caractérisé en ce que** dans la position de repos (15), l'échelle (4) est disposée dans un guide de coulisse (12) réalisé dans la marche (3, 7).

3. Système de marchepied selon l'une quelconque des revendications précédentes, **caractérisé en ce que** dans une position d'utilisation (16), la surface de marche (6) de l'échelle (4) est disposée au niveau de la marche (3, 7).

4. Système de marchepied selon l'une quelconque des revendications précédentes, **caractérisé en ce que** la surface de marche (6) de l'échelle (4) et la surface de marche (8) de la marche (3), dans le volume de rangement (5, 14) de laquelle l'échelle (4) est disposée dans la position de repos (15), forment dans la position d'utilisation (16) une surface de marche (9) commune substantiellement plane.

5. Système de marchepied selon l'une quelconque des revendications précédentes, **caractérisé en ce que** la surface de marche (8) de ladite au moins une marche (3, 7) qui forme le volume de rangement (5, 14) est réalisée de manière pivotante et/ou amovible.

6. Système de marchepied selon l'une quelconque des revendications précédentes, **caractérisé en ce que** l'échelle (4) réalisée sous la forme d'une échelle pliante comprend au moins un ensemble articulé (18, 23) pour le déploiement et l'escamotage.

7. Système de marchepied selon la revendication 6, **caractérisé en ce que** l'échelle (4) réalisée sous la forme d'une échelle pliante comprend des longerons (19, 20) qui sont reliés à la surface de marche (6) ou à un élément de cadre (24) de l'échelle pliante (4) par au moins un ensemble articulé (18, 23).

8. Système de marchepied selon la revendication 7, **caractérisé en ce que** dans la position d'utilisation, les longerons (18, 19) de l'échelle (4) sont réalisés de manière escamotable par rapport à une face inférieure (21) de la surface de marche (6) de l'échelle (4).

9. Système de marchepied selon l'une quelconque des revendications précédentes, **caractérisé en ce que** dans une position d'utilisation, l'échelle (4) réalisée sous la forme d'une échelle pliante est disposée (16) en enjambant au moins une marche (7).

10. Système de marchepied selon l'une quelconque des revendications précédentes, **caractérisé en ce que** dans une position d'utilisation (16), une surface de marche (6) de l'échelle pliante (4) est fixée de manière articulée à la marche (7) formant le volume de rangement (5).

11. Véhicule, en particulier véhicule de camping ou de loisir, **caractérisé en ce que** le véhicule comprend un système de marchepied (1) selon l'une quelconque des revendications 1 à 10.
